Europäisches Patentamt

European Patent Office

Office européen des brevets

(11) Numéro de publication : **0 430 748 A1**

# (12) DEMANDE DE BREVET EUROPEEN

(21) Numéro de dépôt : **90403228.1**

(22) Date de dépôt : **14.11.90**

(51) Int. Cl.⁵ : **F16D 3/00**, F16D 3/20, F16D 3/76

(30) Priorité : **30.11.89 FR 8915828**

(43) Date de publication de la demande :
**05.06.91 Bulletin 91/23**

(84) Etats contractants désignés :
**DE ES GB IT**

(71) Demandeur : **GLAENZER SPICER
10 Rue J.P. Timbaud
F-78301 Poissy (FR)**

(72) Inventeur : **Moulinet, François
39 rue des Temporets
F-78510 Triel Sur Seine (FR)**

(74) Mandataire : **Kohn, Philippe et al
c/o CABINET LAVOIX 2, place d'Estienne
d'Orves
F-75441 Paris Cédex 09 (FR)**

(54) **Joint de transmission à fixité axiale.**

㊼    L'invention concerne un joint de transmission du type comportant un corps (12) solidaire d'un premier arbre et qui délimite une cavité (14) à l'intérieur de laquelle est formée au moins une paire de chemins de roulement (26) dans lesquels est reçu un élément de roulement (24) relié à un second arbre (18).

Selon l'invention, le joint comporte un élément de retenue axiale (28) du corps (12) par rapport au second arbre (18) comportant un élément déformable élastiquement (30) qui possède une forme de révolution, une rigidité axiale élevée et deux surfaces cylindriques coaxiales de liaison intérieure (32) et extérieure (34) qui sont reliées respectivement au second arbre (18) et au corps (12).

Le joint peut être un joint homocinétique à galets pour transmissions de véhicules automobiles.

FIG.1

EP 0 430 748 A1

## JOINT DE TRANSMISSION A FIXITE AXIALE

La présente invention concerne un joint de transmission du type comportant un corps solidaire d'un premier arbre et qui délimite une cavité à l'intérieur de laquelle est formée au moins une paire de chemins de roulement dans lesquels est reçu un élément de roulement relié à un second arbre.

On connaît de nombreux joints de transmission de ce type et notamment les joints homocinétiques pour lesquels il est nécessaire d'assurer une quasi fixité axiale d'un arbre par rapport à l'autre tout en conservant la plus grande liberté d'articulation aux joints de transmission.

De nombreuses solutions ont été proposées qui consistent pour la plupart à prévoir des moyens de butée axiale dans les deux directions, indépendants entre eux ou regroupés dans un même ensemble qui ont tous pour inconvénients communs de provoquer, du fait de leurs conceptions, des phénomènes de chocs qui sont nuisibles à un bon fonctionnement du joint, générateurs de bruits indésirables et qui entraînent une usure prématurée avec apparition de jeux axiaux.

Le but de la présente invention est de proposer un joint de transmission dans lequel les moyens de retenue axiale d'un arbre par rapport à l'autre ne fonctionnent jamais comme des moyens de butée.

Dans ce but l'invention propose un joint du type mentionné plus haut caractérisé en ce qu'il comporte un élément de retenue axiale du corps par rapport au second arbre comportant un élément déformable élastiquement qui possède une forme de révolution, une rigidité axiale élevée et deux surfaces cylindriques coaxiales de liaison intérieure et extérieure qui sont reliées respectivement au second arbre et audit corps.

Grâce à cette conception on obtient un joint de transmission dans lequel l'élément déformable élastiquement fait fonction de palier élastique (non tournant) à grande rigidité axiale.

Selon d'autres caractéristiques de l'invention :
- la surface intérieure de liaison est reliée au second arbre du côté de l'élément de roulement opposé axialement à l'extrémité de cet arbre qui pénètre dans la cavité ;
- la surface extérieure de liaison de l'élément déformable est reliée au voisinage du bord libre de la cavité ;
- la surface intérieure de liaison est montée sur une portée cylindrique correspondante du second arbre par rapport auquel elle est immobilisée axialement ;
- la surface extérieure de liaison est montée sur une partie cylindrique correspondante du corps ;
- la portée cylindrique du corps est formée dans un couvercle de fermeture de ladite cavité qui comporte une face radiale plane d'appui contre une face radiale plane correspondante du corps ;
- la face radiale plane du corps est formée au voisinage du bord libre de ce dernier ;
- l'élément déformable élastiquement constitue une cloison étanche pour fermer la cavité sur l'un de ses côtés.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un joint de transmission réalisé selon les enseignements de la présente invention ;
- la figure 2 est une vue en section selon la ligne 2-2 de la figure 1 ; et

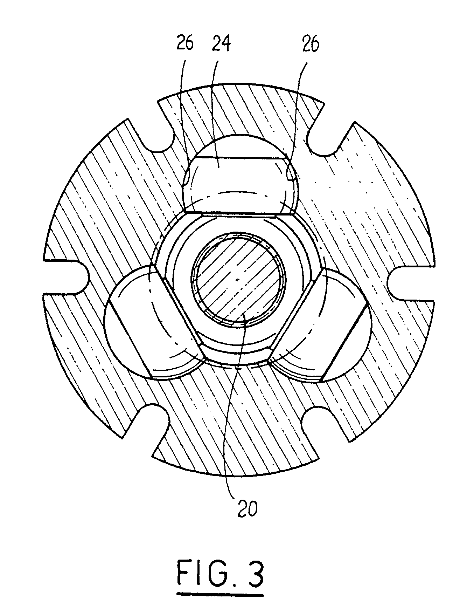

- la figure 3 est une vue en section partielle selon la ligne 3-3 de la figure 1.

On a représenté aux figures un joint de transmission homocinétique tripode 10 du type comportant un corps 12, également appelé tulipe, de forme générale cylindrique qui délimite intérieurement une cavité 14 dans laquelle est reçu le tripode 16.

Le corps 12 est prévu pour être relié à un premier arbre, non représenté, dont le joint assure la liaison en transmission avec le second arbre 18 sur l'extrémité cannelée 20 duquel est monté le tripode 16.

D'une manière connue le tripode comporte trois bras 22 sur chacun desquels est monté un élément de roulement en forme de galet sphérique 24. Chaque galet sphérique 24 est reçu en roulement dans une piste de roulement formée dans le corps 12 et qui est constituée de deux chemins de roulement de profils complémentaires 26.

Dans la position représentée aux figures, c'est-à-dire en position dite alignée, l'axe du second arbre 18 et l'axe du corps cylindrique 12 sont alignés et confondus.

Le joint selon l'invention est un joint dit à fixité axiale, ou quasi fixité axiale, c'est-à-dire qu'il comporte des moyens 28 prévus pour s'opposer à tout déplacement axial relatif des deux arbres de transmission et donc du plan médian P du tripode 16 par rapport au corps 12.

Conformément à l'invention, les moyens de retenue axiale sont constitués par un élément déformable élastiquement 30.

L'élément déformable 30, qui est par exemple réalisé en caoutchouc ou en matériau élastomère, est un organe qui délimite deux surfaces cylindriques coaxiales de liaison, intérieure 32 et extérieure 34 respectivement.

L'élément déformable possède une forme spécifique à un fonctionnement optimum du joint, telle que par exemple une forme de révolution.

La surface cylindrique intérieure de liaison 32 est collée, ou adhérisée, sur une bague annulaire intérieure 36.

La bague intérieure 36 de l'élément déformable 30 est montée serrée sur une portée cylindrique 38 du second arbre 18 entre un épaulement radial 40 de ce dernier et une face radiale latérale en vis-à-vis du corps central du tripode 16.

La surface cylindrique intérieure de liaison est ainsi reliée au second arbre 18 du côté des éléments de roulement 24 qui est opposé axialement à l'extrémité libre 20 du second arbre 18 qui est agencée dans la cavité 14 en regard du fond 44 de cette dernière.

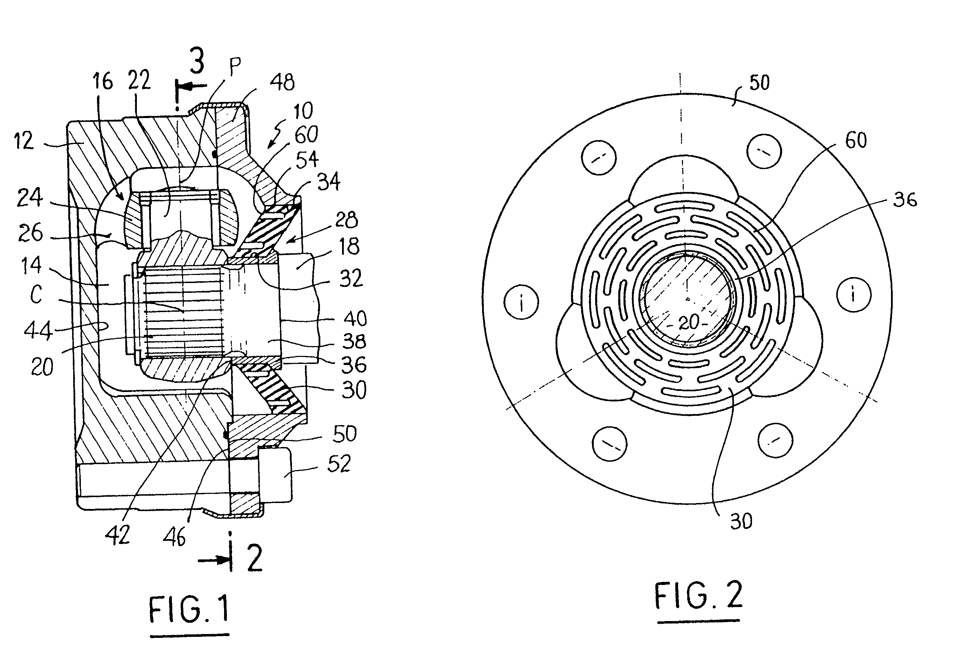

Le corps cylindrique 12 se termine axialement, vers la droite en considérant la figure 1, par une face plane radiale d'extrémité 46.

La surface cylindrique extérieure de liaison 34 de l'élément déformable 30 est reliée au corps 12 au voisinage de sa face d'extrémité 46 au moyen d'un couvercle 48 de fermeture du corps 12.

Le couvercle 48 est une pièce de révolution qui est en appui axial contre la face radiale 46 du corps 12 par une face radiale plane correspondante 50, le serrage axial des deux pièces 12 et 48 étant assuré par exemple au moyen d'une série de six vis 52.

Le couvercle 48 comporte une surface cylindrique coaxiale 54 qui est la surface de portée à laquelle est collée ou adhérisée la surface extérieure de liaison 34 de l'élément déformable élastiquement 30.

La surface de portée 54 s'étend ainsi, dans la position alignée, coaxialement à la surface de portée intérieure 38 formée sur le second arbre 18 en étant légèrement décalée axialement vers la droite par rapport à celle-ci.

Conformément au mode de réalisation préféré représenté sur les figures, l'élément déformable élastiquement 30 est un élément plein, c'est-à-dire qu'il constitue une cloison étanche pour fermer la cavité 14 sur le côté de la cavité opposée au fond 44. Cette caractéristique est particulièrement avantageuse puisqu'elle permet à l'élément 30 de remplir simultanément une double fonction de retenue axiale et d'étanchéité de la cavité 14 qui est remplie de graisse de lubrification du joint homocinétique.

Comme on peut le constater aux figures 1 et 2, l'élément déformable 30 comprend sur sa face radiale tournée vers l'intérieur de la cavité 14 une série d'évidements axiaux, non débouchants, 60 qui ont pour but de lui conférer une très grande souplesse ou élasticité dans les autres directions afin de ne pas s'opposer à la mise sous angle du joint de transmission.

En section axiale, l'élément 30 présente un voile ou galbe tourné vers l'intérieur de la cavité 14 qui participe à la très grande rigidité axiale de l'ensemble dans la direction correspsondant à l'éloignement mutuel des deux arbres de transmission.

Grâce à la conception selon l'invention, il est possible d'étudier et de concevoir l'élément déformable élastiquement 30 de manière que son centre instantané de rotation soit toujours confondu avec le centre géométrique C du joint homocinétique quel que soit l'angle de fonctionnement de ce dernier.

L'invention n'est bien entendu pas limitée au mode de réalisation de l'élément déformable élastiquement qui vient d'être décrit, ni à ses modes de liaison au second arbre 18 et au corps 12.

Compte tenu du fait que l'élément déformable 30 a pour but d'assurer une fonction équivalente à celle d'un palier élastique non tournant à grande rigidité axiale, mais à grande souplesse dans les autres directions de déformation, toutes les conceptions permettant d'atteindre simultanément ces deux fonctions entrent dans le cadre de la présente invention.

L'invention n'est bien entendu pas limitée à un joint homocinétique à galets mais s'applique également par exemple aux joints à billes.

L'invention concerne également les joints homocinétiques fixes ou quasi fixes utilisés notamment dans les transmissions latérales arrière ou les transmissions longitudinales disposées entre le groupe motopropulseur et le pont arrière ou une boîte de transfert en direction de celui-ci.

De même il est possible de conférer à l'élément déformable élastiquement monté entre l'arbre 18 et le corps 12, une élasticité en rotation autour de son axe de révolution qui permet de rattraper automatiquement les jeux angulaires existant entre le tripode 16 et le corps 12 afin d'éviter les bruits lors des démarrages.

De même la surface cylindrique extérieure de l'élément 30 peut être reliée directement à une surface de portée cylindrique formée dans le corps 12 et non pas dans un couvercle rapporté 48.

L'invention trouve tout particulièrement à s'appliquer aux joints dits "à grande liberté axiale" c'est-à-dire ceux pour lesquels en fonctionnement sous angle, les sollicitations axiales de l'élément menant par rapport à l'élément mené sont relativement faibles. Un joint homocinétique tripode est un exemple de ces joints.

## Revendications

1. Joint de transmission du type comportant un corps (12) solidaire d'un premier arbre et qui délimite une cavité (14) à l'intérieur de laquelle est formée au moins une paire de chemins de roulement (26) dans lesquels est reçu un élément de roulement (24) relié à un second arbre (18), caractérisé en ce qu'il comporte un élément de retenue axiale (28) du corps (12) par rapport au second arbre (18) comportant un élément déformable élastiquement (30) qui possède une forme de révolution, une rigidité axiale élevée et deux surfaces cylindriques coaxiales de liaison intérieure (32) et extérieure (34) qui sont reliées respectivement au second arbre (18) et audit corps (12).

2. Joint de transmission selon la revendication 1, caractérisé en ce que ladite surface intérieure de liaison (32) est reliée au second arbre (18) du côté de l'élément de roulement (24) opposé axialement à l'extrémité (26) de cet arbre qui pénètre dans la cavité (14).

3. Joint de transmission selon l'une des revendications 1 ou 2, caractérisé en ce que ladite surface extérieure de liaison (34) est reliée audit corps (12) au voisinage du bord libre (46) de la cavité (14).

4. Joint de transmission selon l'une des revendications 1 ou 2, caractérisé en ce que ladite surface intérieure de liaison (32) est montée sur une portée cylindrique correspondante (38) du second arbre (18) par rapport auquel elle est immobilisée axialement.

5. Joint de transmission selon l'une des revendications 1 ou 3, caractérisé en ce que ladite surface extérieure de liaison (34) est montée sur une portée cylindrique correspondante dudit corps.

6. Joint de transmission selon la revendication 5, caractérisé en ce que la portée cylindrique dudit corps est formée dans un couvercle (48) de fermeture de ladite cavité (14) qui comporte une face radiale plane (50) d'appui contre une face radiale plane correspondante (46) du corps (12).

7. Joint de transmission selon l'une des revendications 5 ou 6 prises en combinaison avec la revendication 3, caractérisé en ce que la face radiale plane (46) du corps (12) est formée au voisinage du bord libre de ce dernier.

8. Joint de transmission selon l'une quelconque des revendications précédentes, caractérisé en ce que l'élément déformable élastiquement (30) constitue une cloison étanche pour fermer ladite cavité (14) sur un de ses côtés.

EP 0 430 748 A1

FIG. 2

FIG. 1

5

FIG. 3

Office européen
des brevets

**RAPPORT DE RECHERCHE EUROPEENNE**

Numero de la demande

EP    90 40 3228

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 416 811 (GLAENZER SPICER) * Pages 5-7; figures 4,6 * | 1-4,7,8 | F 16 D    3/00 F 16 D    3/20 F 16 D    3/76 |
| Y | | 5,6 | |
| Y | FR-A-1 439 507 (STROMAG) * En entier * | 5,6 | |
| A | GB-A- 591 146 (DUNLOP) * En entier * | 1,4 | |
| A | GB-A- 874 483 (EISENHÜTTE WESTFALIA) * En entier * | 5,6 | |

**DOMAINES TECHNIQUES RECHERCHES (Int. Cl.5)**

F 16 D    3/00

Le présent rapport a été établi pour toutes les revendications

| Lieu de la recherche | Date d'achèvement de la recherche | Examinateur |
|---|---|---|
| LA HAYE | 07-02-1991 | BALDWIN D.R. |